# EUROPÄISCHE PATENTSCHRIFT

(11) **EP 0 659 795 B1**
(45) Veröffentlichungstag und Bekanntmachung des Hinweises auf die Patenterteilung: **26.04.2000**
(21) Anmeldenummer: 94119301.3
(22) Anmeldetag: 07.12.1994
(51) Int. Cl.: C08G 63/52, C08G 18/68, C09D 175/06

(54) **Polyesterpolyole und ihre Verwendung in Zweikomponenten-Polyurethanlacken**
Polyester polyols and their use in two-component polyurethane varnishes
Polyester-polyols et leur utilisation dans des vernis polyuréthanes à deux composantes

(30) Priorität: 20.12.1993 DE 4343452
(43) Veröffentlichungstag der Anmeldung: 28.06.1995
(73) Patentinhaber: BAYER AG, 51368 Leverkusen (DE)
(72) Erfinder: Wamprecht, Christian, Dr., D-41472 Neuss (DE); Sonntag, Michael, Dr., D-51519 Odenthal (DE); Meixner, Jürgen, Dr., D-47803 Krefeld (DE)

(56) Entgegenhaltungen:
- EP-A- 0 571 829
- G. OERTEL, HERAUSGEBER 'Kunststoff Handbuch Bd. 7, Polyurethane, 3.Auflage' 1993 , CARL HANSER VERLAG , MUENCHEN, GER * Seite 603 * * Seite 609 *

## Beschreibung

Die Erfindung betrifft neue, spezielle Polyesterpolyole auf Basis ausgewählter Ausgangsmaterialien und ihre Verwendung als Bindemittelkomponente in Zweikomponenten-Polyurethanlacken (2-K-PUR-Lacken), vorzugsweise für die Autoreparatur- und Großfahrzeuglackierung.

Es ist seit langem bekannt, wenig flexible Substrate, wie z.B. Metall oder Holz mit Zweikomponenten-Polyurethanlacken auf Basis von Hydroxylgruppen aufweisenden Polyestern, Polyethern oder Polyacrylaten und organischen Polyisocyanaten zu beschichten. Die resultierenden Lacküberzüge zeichnen sich insbesondere durch eine ausgezeichnete Härte, eine sehr gute Haftung und hohe Wetterbeständigkeit aus. Die chemischen Grundlagen dieser Lacke und Überzüge werden u.a. in "Lackkunstharze", Hans Wagner/Hans Friedrich Sarx, Carl Hanser Verlag, München, Seiten 153 bis 173, 1971, beschrieben.

Die Zweikomponenten-Polyurethanlacke des Standes der Technik, hauptsächlich solche auf Basis von aromatischen Polyesterpolyolen, führen jedoch oft zu Lacküberzügen, deren Vergilbungsneigung, insbesondere bei Bestrahlung mit kurzwelligem UV-Licht, den diesbezüglichen Anforderungen an witterungs-, kreidungs- und vergilbungsbeständige Überzüge in der Autoreparatur- und Großfahrzeuglackierung oft nicht genügt.

Ein typisches Beispiel für solche vergilbungsanfällige Beschichtungsmittel sind Bindemittel gemäß DE-AS 1 271 867. Zwar zeigen Lacke auf Basis dieser Bindemittel (aromatische Polyesterpolyole/Polyisocyanate auf Basis Hexamethylendiisocyanat) nach 2000 Weather-o-meter-Stunden weder Glanzabfall, Kreidung noch Farbtonänderung, vergilben jedoch deutlich nach 1000 h Bestrahlung mit kurzwelligem UV-Licht.

Eine wesentliche Verbesserung hinsichtlich der Vergilbungsanfälligkeit von 2-K-PUR-Lacken bei Bestrahlung mit kurzwelligem UV-Licht kann mit den Polyesterpolyolen, die in der EP-A-0 318 800 beschrieben sind, erzielt werden. Jedoch sind diese Polyesterpolyole für die Herstellung von 2-K-PUR-Lacken für Autoreparatur-und Großfahrzeuglackierung nicht geeignet, weil einerseits die Trocknungszeit (Antrocknung und Durchtrocknung) zu lange ist, andererseits die resultierenden Lackfilme hochelastisch sind und daher nicht die nötige Oberflächenhärte besitzen.

Die EP-A-0 494 442 beschreibt Hitze-härtbare Einkomponenten-Beschichtungsmittel, die ebenfalls UV-beständige Lacke liefern. Die bei diesen Beschichtungsmittel verwendeten Polyesterpolyole sind jedoch für die Anwendung als Polyolkomponente in 2-K-PUR-Lacken für Autoreparatur- und Großfahrzeuglackierung nicht geeignet, weil der Verzweigungsgrad, die Härteeinstellung und der OH-Gehalt der Polyester zu gering sind, um schnell trocknende, harte, lösungsmittel-und chemikalienbeständige Lackfilme zu erzielen.

Es war daher die der Erfindung zugrundeliegende Aufgabe, neue Zweikomponenten-Polyurethanlacke zur Verfügung zu stellen, die den Anforderungen genügen und insbesondere für die Autoreparatur- und Großfahrzeuglackierung optimal geeignet sind. Die neuen Lacke sollten insbesondere folgenden Anforderungen gleichzeitig genügen:
1. Vergilbungsfreie Filmoberflächen bei Einwirkung von kurzwelligem UV-Licht:
   Der Lackfilm muß der Bestrahlung mit kurzwelligem UV-Licht (Wellenlänge <400 mm) über einen Zeitraum von mindestens 1000 Stunden ohne Vergilbung standhalten.
2. Schnelle Trocknung bei Raumtemperatur
   Der Lackfilm soll nach ca. 2 h sandtrocken und nach ca. 8 h durchgetrocknet sein (DIN 53150).
3. Sehr gute Lösungsmittel- und Chemikalienbeständigkeit
   Der Lackfilm muß Einwirkungen üblicher Lacklösungsmittel, wie z.B. Xylol, Butylacetat, Aceton, Methylethylketon, Superbenzin und Chemikalien, wie z.B. Natronlauge, Schwefelsäure, Baumharz, Pankreatin und Teer, unbeschadet überstehen.
4. Gute Licht- und Wetterbeständigkeit
   Der Lackfilm darf nach 2000 Weather-o-meter-Stunden sowie Freibewitterung im Industrieklima weder Glanzabfall, Kreidung noch Farbtonveränderung zeigen.
5. Hohe Filmhärte und mechanische Widerstandsfähigkeit
   Der Lackfilm soll möglichst nach 2 Tagen seine Endhärte (Pendeldämpfung >120 s) erreicht haben und damit kratz- und abriebfest sein.
6. Ausreichende Verarbeitungszeit
   Frisch angesetzte Lacke müssen mindestens eine Verarbeitungszeit von 6 Stunden haben, d.h., die Viskosität in Form der Auslaufzeit aus einem DIN-4-mm-Becher darf sich innerhalb 6 Stunden nicht verdoppeln.

Wie jetzt überraschenderweise gefunden wurde, gelingt es durch die Verwendung der nachstehend näher beschriebenen, erfindungswesentlichen Polyesterpolyole auf Basis ausgewählter Ausgangsmaterialien als Polyhydroxylkomponente bzw. wesentlichen Teil der Polyhydroxylkomponente in Zweikomponenten-Polyurethanlacken, die gestellte Aufgabe zu lösen und insbesondere vergilbungsresistente, schnell trocknende, harte Lackfilme mit guten Beständigkeitseigenschaften zu erhalten.

Gegenstand der Erfindung sind Polyesterpolyole des Hydroxylzahlbereichs 175 bis 520, die Umsetzungsprodukte von
a) 50 bis 60 Mol-% einer Polyolkomponente mit
b) 40 bis 50 Mol-% einer Dicarbonsäurekomponente
   darstellen, dadurch gekennzeichnet, daß
   a) die Polyolkomponente aus (i) 0 bis 39 Mol-% eines zweiwertigen, aliphatischen oder cycloaliphatischen Alkohols mit mindestens zwei Kohlenstoffatomen, der von Neopentylglykol verschieden ist, oder eines Gemischs mehrerer derartiger Alkohole, (ii) 20 bis 59 Mol-% Neopentylglykol und (iii) 41 bis 80 Mol-% eines mindestens dreiwertigen, aliphatischen Alkohols mit mindestens 3 Kohlenstoffatomen oder eines Gemischs derartiger Alkohole besteht und
   b) die Dicarbonsäurekomponente aus (iv) 0 bis 60 Mol-% einer aliphatischen oder cycloaliphatischen, gesättigten oder ungesättigten Dicarbonsäure bzw. deren Anhydrid mit mindestens zwei Kohlenstoffatomen, die von Fumarsäure, Itaconsäure und Maleinsäure bzw. deren Anhydride verschieden ist oder eines Gemischs mehrerer derartiger Säuren oder Anhydride und (v) 40 bis 100 Mol-% Fumarsäure, Itaconsäure oder Maleinsäure bzw. deren Anhydride oder Gemische davon besteht,
   wobei sich die unter a) und b) gemachten Prozentangaben jeweils zu 100 ergänzen.

Die erfindungsgemäßen Polyesterpolyole unterscheiden sich bezüglich ihrer chemischen Zusammensetzung sowohl von den Polyesterpolyolen gemäß EP-A-0 318 800 als auch gemäß eigener älterer deutscher Patentanmeldung P 42 17 363.9, als auch gemäß eigener älterer deutscher Patentanmeldung P 43 37 432.8. Im übrigen sind die erfindungsgemäßen Polyesterpolyole insbesondere für ein Anwendungsgebiet bestimmt, welches in den genannten älteren Dokumenten nicht angesprochen wird.

Gegenstand der Erfindung ist demzufolge auch die Verwendung der erfindungsgemäßen Polyesterpolyole, gegebenenfalls in Abmischung mit anderen organischen Polyhydroxylverbindungen, als Bindemittelkomponente für Zweikomponenten-Polyurethanlacke, die Lackpolyisocyanate, sowie gegebenenfalls die in der Polyurethantechnologie üblichen Hilfs- und Zusatzmittel enthalten, insbesondere bei der Herstellung von Lacküberzügen auf Großfahrzeugen und bei der Autoreparaturlackierung.

Die besonders gute Eignung der erfindungswesentlichen Polyesterpolyole für die erfindungsgemäße Verwendung ist auf die erfindungswesentliche Auswahl der den Polyesterpolyolen zugrundeliegenden Ausgangsmaterialien und insbesondere deren Mengenverhältnis zurückzuführen. Die erfindungsgwesentlichen Polyesterpolyole weisen Hydroxylzahlen innerhalb des Bereichs von 175 bis 520, vorzugsweise 200 bis 450 und besonders bevorzugt 250 bis 400, Säurezahlen innerhalb des Bereichs von 1 bis 80, vorzugsweise 5 bis 50 und besonders bevorzugt 10 bis 30 und ein mittleres, aus der Stöchiometrie der eingesetzten Ausgangsmaterialien berechenbares Molekulargewicht von 600 bis 10000, vorzugsweise 600 bis 5000, auf. Die erfindungsgemäßen Polyesterpolyole sind hochviskose, nahezu farblose, klare Harze, die in Lacklösemitteln wie beispielsweise Kohlenwasserstoffen wie Toluol, Xylol oder höheren Alkylbenzolen, Estern wie Ethylacetat, Propylacetat, Butylacetat, Methylglykolacetat, Ethylglykolacetat, Methoxypropylacetat, Ketonen wie Aceton, Methylethylketon und Methylisobutylketon oder Gemischen dieser Lösemittel klar löslich sind.

Erfindungswesentlich ist außerdem, daß die Polyesterpolyole aus den obengenannten ausgewählten Aufbaukomponenten a) und b) hergestellt werden.

Die Polyolkomponente a) setzt sich aus den Einzelbestandteilen (i) bis (iii) zusammen.

Bei der Komponente (i) handelt es sich um zweiwertige, aliphatische oder cycloaliphatische Alkohole mit mindestens 2, vorzugsweise 2 bis 18 und insbesondere 2 bis 6 Kohlenstoffatomen mit Ausnahme von Neopentylglykol wie z.B. Ethylenglykol, Propandiol-1,2 und -1,3, Butandiol-1,3, -2,3 und -1,4, Pentandiol-1,5, Hexandiol-1,6 und -2,5, 2-Methyl-2,4-pentandiol, 3-Methyl-1,5-pentandiol, 2-Methyl-2-propyl-1,3-propandiol, 2,2-Diethyl-1,3-propandiol, Cyclohexandiol-1,2 und -1,4, 1,4-Cyclohexandimethanol, 2,2-Bis(4-hydroxycyclohexyl)-propan und Octahydro-4,7-methano-1H-indendimethanol. Gemische derartiger Diole können ebenfalls als Komponente (i) verwendet werden. Die Komponente (i) wird in einer Menge von 0 bis 39 Mol-%, vorzugsweise 0 bis 20 Mol-% und besonders bevorzugt 0 bis 10 Mol-%, bezogen auf die Gesamtmenge der Komponente (i) bis (iii), eingesetzt.

Bei der Komponente (ii) handelt es sich um Neopentylglykol (2,2-Dimethyl-propandiol-1,3). Die Komponente (ii) wird in Mengen von 20 bis 59 Mol-%, vorzugsweise 30 bis 50 Mol-% und besonders bevorzugt 35 bis 45 Mol-%, bezogen auf die Gesamtmenge der Komponente (i) bis (iii), eingesetzt.

Bei der Komponente (iii) handelt es sich um höher als zweiwertige, aliphatische Alkohole mit mindestens 3, vorzugsweise 3 bis 6 Kohlenstoffatomen wie z.B. Glycerin, Trimethylolpropan, Pentaerythrit oder Gemische dieser Alkohole. Die Komponente (iii) wird in Mengen von 41 bis 80 Mol-%, vorzugsweise 50 bis 70 Mol-% und besonders bevorzugt 55 bis 65 Mol-%, bezogen auf die Gesamtmenge der Komponenten (i) bis (iii), eingesetzt.

Bei der Dicarbonsäurekomponente b) handelt es sich um ein Gemisch aus den Einzelkomponenten (iv) und (v). In dem Gemisch liegen 0 bis 60 Mol-%, vorzugsweise 0 bis 40 Mol-% und besonders bevorzugt 0 bis 20 Mol-% der Komponente (iv) und 40 bis 100 Mol-%, vorzugsweise 60 bis 100 Mol-% und besonders bevorzugt 80 bis 100 Mol-% der Komponente (v), bezogen auf die Gesamtmenge der Komponente (iv) und (v), vor.

Bei der Komponente (iv) handelt es sich um aliphatische oder cycloaliphatische, gesättigte oder ungesättigte Dicarbonsäuren oder deren Anhydride mit mindestens 2 Kohlenstoffatomen, die von Fumarsäure, Itaconsäure und Maleinsäure bzw. deren Anhydride verschieden sind, wie z.B. Oxalsäure, Malonsäure, Bernsteinsäure, Bernsteinsäureanhydrid, Glutarsäure, Adipinsäure, Pimelinsäure, Korksäure, Azelainsäure, Hexahydrophthalsäure, Hexahydrophthalsäureanhydrid, Tetrahydrophthalsäure und Tetrahydrophthalsäureanhydrid. Gemische derartiger Säuren bzw. Anhydride können selbstverständlich ebenfalls eingesetzt werden.

Bei der Komponente (v) handelt es sich um Dicarbonsäuren, ausgewählt aus der Gruppe bestehend aus Fumarsäure, Maleinsäure und Itaconsäure, bzw. um Anhydride der letztgenannten beiden Säuren oder um Gemische derartiger Säuren bzw. Säureanhydride. Besonders bevorzugt besteht die Komponente (v) aus Maleinsäureanhydrid.

Die im Zusammenhang mit den Komponenten a) und b) gemachten Prozentangaben ergänzen sich jeweils zu 100. Bei der Herstellung der Polyesterpolyole kommen 50 bis 60, vorzugsweise 52 bis 58 Mol-% der Komponente a) und 40 bis 50, vorzugsweise 42 bis 48 Mol-% der Komponente b) zum Einsatz, wobei sich auch hier die genannten Prozentangaben zu 100 ergänzen.

Die Herstellung der erfindungswesentlichen Polyesterpolyole erfolgt in an sich bekannter Weise nach Methoden wie sie beispielsweise in "Ullmanns Encyclopädie der Technischen Chemie", Verlag Chemie Weinheim, 4. Auflage (1980), Band 19, Seiten 61ff. oder von H. Wagner und H.F. Sarx in "Lackkunstharze", Carl Hanser Verlag, München (1971), Seiten 86 bis 152 ausführlich beschrieben sind. Die Veresterung erfolgt gegebenenfalls in Gegenwart einer katalytischen Menge eines üblichen Veresterungskatalysators wie z.B. Säuren, Basen oder Übergangsmetallverbindungen wie z.B. Titantetrabutylat bei ca. 80 bis 260°C, vorzugsweise 100 bis 230°C. Die Veresterungsreaktion wird so lange durchgeführt, bis die angestrebten Werte für die Hydroxyl- und Säurezahl erreicht sind.

Es ist prinzipiell jedoch auch möglich, den angestrebten Wert für die Säurezahl zu unterschreiten und durch anschließende Umsetzung des entstandenen Polyesters mit einem Dicarbonsäureanhydrid unter Halbesterbildung die gewünschte Säurezahl einzustellen. Geeignete Dicarbonsäureanhydride sind beispielsweise Maleinsäureanhydrid, Bernsteinsäureanhydrid, Tetrahydrophthalsäureanhydrid und Hexahydrophthalsäureanhydrid.

Bei der erfindungsgemäßen Verwendung der erfindungswesentlichen Polyesterpolyole werden diese gegebenenfalls in Abmischung mit anderen, aus der Polyurethanlacktechnologie bekannten, organischen Polyhydroxylverbindungen als Polyhydroxyl-Komponente eingesetzt. Bei diesen anderen Polyhydroxylverbindungen kann es sich um die üblichen Polyester-, Polyether- oder Polyacrylat-Polyole handeln. Vorzugweise werden als weitere organische Polyhydroxylverbindungen, falls solche überhaupt neben den erfindungswesentlichen Polyesterpolyolen zum Einsatz gelangen, die an sich bekannten Polyacrylatpolyole des Standes der Technik eingesetzt.

Als Abmischkomponente geeignete Polyacrylatpolyole sind in Lacklösungsmitteln der bereits beispielhaft genannten Art lösliche Copolymerisate von Hydroxylgruppen aufweisenden Monomeren mit anderen olefinisch ungesättigten Monomeren wie z.B. Butylacrylat, Methylmethacrylat, Styrol, Acrylsäure, Acrylnitril und/oder Methacrylnitril. Geeignete Hydroxylgruppen aufweisende Monomere sind insbesondere 2-Hydroxyethyl-(meth)acrylat und das durch Anlagerung von Propylenoxid an Acrylsäure bzw. Methacrylsäure erhältliche Hydroxypropyl-(meth)acrylat-Isomerengemisch. Der Hydroxylgruppengehalt der in Betracht kommenden Polyacrylatpolyole liegt im allgemeinen zwischen 1 und 5 Gew.-%.

Bei der erfindungsgemäßen Verwendung der erfindungswesentlichen Polyesterpolyole können diese in Abmischung mit bis zu 90, vorzugsweise bis zu 50 Hydroxyläquivalent-%, bezogen auf alle Polyhydroxylverbindungen, an anderen Polyolen der beispielhaft genannten Art zum Einsatz gelangen. Besonders bevorzugt werden jedoch die erfindungswesentlichen Polyesterpolyole als alleinige Polyol-Komponente bei der erfindungsgemäßen Verwendung eingesetzt.

Reaktionspartner für die Polyol-Komponente bei der erfindungsgemäßen Verwendung der erfindungswesentlichen Polyesterpolyole sind die üblichen "Lackpolyisocyanate", das heißt, vor allem die bekannten, Urethangruppen oder insbesondere Biuretgruppen bzw. Isocyanuratgruppen aufweisenden Modifizierungsprodukte von einfachen Diisocyanaten wie z.B. 1,6-Diisocyanatohexan, 1-Isocyanato-3,3,5-trimethyl-5-isocyanatomethyl-cyclohexan (Isophorondiisocyanat), 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/oder cycloaliphatisch gebundenen Isocyanatgruppen eingesetzt.

Zu den Urethangruppen aufweisenden "Lackpolyisocyanaten" gehören z.B. die Umsetzungsprodukte von 2,4- und gegebenenfalls 2,6-Diisocyanatotoluol mit unterschüssigen Mengen an Trimethylolpropan, bzw. dessen Gemischen mit einfachen Diolen wie z.B. den isomeren Propan- oder Butandiolen. Die Herstellung derartiger, Urethangruppen aufweisender Lackpolyisocyanate in praktisch monofreier Form ist beispielsweise in DE-PS 1 090 196 beschrieben.

Zu den Biuretgruppen aufweisenden Lackpolyisocyanaten, die bei der erfindungsgemäßen Verwendung besonders bevorzugt sind, gehören insbesondere jene auf Basis von 1,6-Diisocyanatohexan, deren Herstellung beispielsweise in EP-B1-0 003 505, DE-PS 1 101 394, US-PS 3 358 010 oder US-PS 3 903 127 beschrieben ist.

Zu den ebenfalls bevorzugten, Isocyanuratgruppen aufweisenden Lackpolyisocyanaten gehören insbesondere die Trimerisate bzw. Mischtrimerisate der oben beispielhaft genannten Diisocyanate, wie z.B. die Isocyanuratgruppen aufweisenden Polyisocyanate, auf Basis Diisocyanatotoluol gemäß GB-PS 1 060 430, GB-PS 1 506 373 oder GB-PS 1 485 564, die Mischtrimerisate von Diisocyanatotoluol mit 1,6-Diisocyanatohexan, die beispielsweise gemäß DE-PS 1 644 809 oder DE-OS 3 144 672 zugänglich sind, und insbesondere die aliphatischen bzw. die aliphatisch-cycloaliphatischen Trimerisate bzw. Mischtrimerisate auf Basis von 1,6-Diisocyanatohexan und/oder Isophorondiisocyanat, die beispielsweise gemäß US-PS 4 324 879, US-PS 4 288 586, DE-OS 3 100 262, DE-OS 3 100 263, DE-OS 3 033 860 oder DE-OS 3 144 672 zugänglich sind. Die bei der erfindungsgemäßen Verwendung zum Einsatz gelangenden Lackpolyisocyanate weisen im allgemeinen einen Isocyanatgehalt von 5 bis 25 Gew.-%, eine mittlere NCO-Funktionalität von 2,0 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Lackpolyisocyanate zum Einsatz gelangen.

In den bei der erfindungsgemäßen Verwendung zum Einsatz gelangenden Zweikomponenten-Polyurethanlacken liegen die Polyolkomponente und die Polyisocyanatkomponente in einem Äquivalentverhältnis von Isocyanatgruppen zu Hydroxylgruppen von 5:1 bis 1:2, vorzugsweise 1,5:1 bis 1:1,2 entsprechenden Mengen vor. Die durch Vermischen der beiden Komponenten erhaltenen Zweikomponenten-Bindemittel haben nur eine begrenzte Verarbeitungszeit von ca. 4 bis 48 Stunden und werden entweder als solche (lösungsmittelfreie Klarlacke), vorzugsweise jedoch unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise Lösungsmittel in Betracht, wie z.B. Ethylacetat, Butylacetat, Methoxypropylacetat, Methylethylketon, Methylisobutylketon, Toluol, Xylol, Testbenzin oder beliebige Gemische dieser Lösungsmittel.

Die Lösungsmittel werden in einer Menge von bis zu 70, vorzugsweise bis zu 40 Gew.-%, bezogen auf Gesamtgemisch, mitverwendet.

Weitere, gegebenenfalls mitzuverwendende Hilfs- und Zusatzmittel sind z.B. Weichmacher wie z.B. Trikresylphosphat oder Phthalsäurediester, Chlorparaffine, Pigmente und Füllstoffe, wie Titandioxid, Bariumsulfat, Kreide, Ruß; Katalysatoren wie z.B. N,N-Dimethylbenzylamin, N-Methylmorpholin, Zinkoctoat, Zinn-II-octoat oder Dibutylzinndilaurat; Verlaufsmittel; Verdickungsmittel, gegebenenfalls Stabilisatoren, wie substituierte Phenole, organofunktionelle Silane als Haftvermittler sowie Lichtschutzmittel und UV-Absorber. Derartige Lichtschutzmittel sind beispielsweise sterisch gehinderte Amine, wie sie z.B. in DE-OS 3 993 655 (= US-PS 4 123 418 und US-OS 4 110 304) und DE-OS 2 456 864 (= US-OS 3 993 655 und US-PS 4 221 701) beschrieben sind. Besonders bevorzugte Verbindungen sind: Bis-(1,2,2,6,6-pentamethylpiperidyl-4)-sebacat, Bis-(2,2,6,6-tetramethylpiperidyl-4)-sebacat, n-Butyl(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z.B. Molekularsieb-Zeolithen, entfernt werden.

Die Trocknung der bei der erfindungsgemäßen Verwendung resultierenden Lackfilme kann bei Raumtemperatur erfolgen und bedarf keiner Temperaturerhöhung, um die eingangs erwähnten, optimalen Eigenschaften zu erreichen. Bei Anwendung der Bindemittel als Reparaturlack ist jedoch oftmals eine Temperaturerhöhung auf ca. 60 bis 100°C, vorzugsweise 60 bis 80°C, während eines Zeitraumes von 20 bis 60 Minuten empfehlenswert, um die Trocknungs- und Härtungszeit zu verkürzen.

Die erfindungsgemäß zum Einsatz gelangenden Lacke eignen sich vor allem für die Lackierung von Großfahrzeugen, wie z.B. Flugzeugen, Eisen- und Straßenbahnwaggons, LKW-Aufbauten u.dgl. Ein weiteres bevorzugtes Einsatzgebiet besteht in ihrer Verwendung als Autoreparaturlack.

Die besonderen Vorteile der erfindungsgemäß zum Einsatz kommenden Lacke liegen bei ausreichend langer Standzeit in ihrer schnellen Trocknung bei Raumtemperatur, wobei schon nach 1 bis 2 Tagen die hohe Endhärte der Lackfilme erreicht ist, in ihrer besonders guten Beständigkeit gegen die Einwirkung von Lösemitteln und Chemikalien, in ihrer Licht- und Wetterbeständigkeit bei guter Glanzhaltung und letztendlich in der gegenüber dem Stand der Technik hervorragenden Vergilbungsbeständigkeit bei Bestrahlung mit Licht niedriger Wellenlänge, z.B. kurzwelligem UV-Licht.

Die erfindungsgemäß zum Einsatz gelangenden Lacke können selbstverständlich nach allen üblichen Methoden der Lacktechnologie wie z.B. Streichen, Spritzen oder Tauchen auf die zu beschichtenden Substrate aufgetragen werden. Die erfindungsgemäßen Lacke eignen sich sowohl zur Herstellung von Grundierungen als auch zur Herstellung von Zwischenschichten und insbesondere zur Herstellung von Deckschichten auf den zu lackierenden Substraten.

Die nachfolgenden Beispiele dienen zur weiteren Erläuterung der Erfindung.

### Beispiele

### Allgemeine Herstellvorschrift für die erfindungswesentlichen Polyesterpolyole:

Die Polyole und die ungesättigte(n) Dicarbonsäure(n)/Anhydrid(e) werden in einen Reaktor, der mit Rührer, Heizung, automatischer Temperatursteuerung, Kolonne und Vorlage ausgerüstet ist, eingewogen und auf 100 bis 150°C erhitzt, wobei ein Stickstoffstrom durch die inhomogene Rohstoffmischung durchgeleitet wird. Nach Zugabe der restlichen Dicarbonsäuren wird das Rohstoffgemisch innerhalb von 4 bis 8 Stunden unter Rühren und Durchleiten von Stickstoff auf 200°C aufgeheizt. Dabei wird die am Kopf der Kolonne gemessene Temperatur bei maximal 105°C gehalten. Die Schmelze wird hierbei homogen und klar. Sobald die Kopftemperatur 90°C unterschreitet, wird die Kolonne entfernt und mit erhöhtem Stickstoffstrom bis zu der gewünschten Säurezahl auskondensiert.

Die Zusammensetzung und die Daten der einzelnen, auf diesem Wege hergestellten Polyester sind in den Beispielen 1 bis 7 angegeben. Die gemachten Mengenangaben in "Mol" beziehen sich, wie aus den Gewichtsangaben in "g" ersichtlich, nicht auf die tatsächliche Anzahl der jeweiligen "Mole", sondern auf das Molverhältnis. Die Zahlenangaben bezüglich der Hydroxyl- und Säurezählen beziehen sich auf "mg KOH/g".

### Beispiel 1 (erfindungsgemäß)

| Polyester aus | Einwaage |
|---|---|
| 1,55 Mol Trimethylolpropan | 1980 g |
| 1,00 Mol Neopentylglykol | 990 g |
| 1,89 Mol Maleinsäureanhydrid | 1760 g |
| 0,19 Mol Tetrahydrophthalsäureanhydrid | 270 g |

| | |
|---|---|
| Hydroxylzahl: | 279 |
| Säurezahl: | 25 |

### Beispiel 2 (erfindungsgemäß)

| Polyester aus | Einwaage |
|---|---|
| 1,55 Mol Trimethylolpropan | 1995 g |
| 1,00 Mol Neopentylglykol | 1000 g |
| 2,13 Mol Maleinsäureanhydrid | 2005 g |

| | |
|---|---|
| Hydroxylzahl: | 280 |
| Säurezahl: | 28 |

### Beispiel 3 (erfindungsgemäß)

| Polyester aus | Einwaage |
|---|---|
| 3,49 Mol Trimethylolpropan | 2080 g |
| 1,00 Mol Neopentylglykol | 463 g |
| 0,50 Mol Cyclohexandimethanol | 320 g |
| 2,97 Mol Maleinsäureanhydrid | 1294 g |
| 0,85 Mol Adipinsäure | 552 g |
| 0,42 Mol Hexahydrophthalsäureanhydrid | 291 g |

| | |
|---|---|
| Hydroxylzahl: | 254 |
| Säurezahl: | 15 |

### Beispiel 4 (erfindungsgemäß)

| Polyester aus | Einwaage |
|---|---|
| 1,56 Mol Trimethylolpropan | 1985 g |
| 1,00 Mol Neopentylglykol | 992 g |
| 1,89 Mol Maleinsäureanhydrid | 1764 g |
| 0,18 Mol Hexahydrophthalsäureanhydrid | 259 g |

| | |
|---|---|
| Hydroxylzahl: | 275 |
| Säurezahl: | 24 |

### Beispiel 5 (erfindungsgemäß)

| Polyester aus: | Einwaage |
|---|---|
| 0,50 Mol Pentaerythrit | 688 g |
| 0,75 Mol Trimethylolpropan | 1018 g |
| 1,00 Mol Neopentylglykol | 1052 g |
| 0,25 Mol Hexandiol | 299 g |
| 1,54 Mol Maleinsäureanhydrid | 1526 g |
| 0,27 Mol Tetrahydrophthalsäureanhydrid | 417 g |

| | |
|---|---|
| Hydroxylzahl: | 373 |
| Säurezahl: | 15 |

### Beispiel 6 (erfindungsgemäß)

| Polyester aus | Einwaage |
|---|---|
| 1,55 Mol Trimethylolpropan | 2029 g |
| 1,00 Mol Neopentylglykol | 1014 g |
| 1,89 Mol Maleinsäureanhydrid | 1803 g |
| 0,16 Mol Bernsteinsäureanhydrid | 154 g |

| | |
|---|---|
| Hydroxylzahl: | 294 |
| Säurezahl: | 20 |

### Beispiel 7 (Vergleich)

| Polyester aus | Einwaage |
|---|---|
| 3,45 Mol Trimethyolpropan | 2495 g |
| 1,00 Mol Phthalsäureanhydrid | 799 g |
| 2,00 Mol Hexahydrophthalsäureanhydrid | 1663 g |
| 0,08 Mol Maleinsäureanhydrid | 43 g |

| | |
|---|---|
| Hydroxylzahl: | 261 |
| Säurezahl: | 3,1 |

### Beispiel 8 (Verwendung)

Dieses Beispiel beschreibt die Herstellung gebrauchsfertiger Lacke auf Basis der Polyesterpolyole gemäß Beispiel 1 bis 7, deren Applikation und die Prüfung der resultierenden Lackfilme.

Zur Beurteilung der allgemeinen Lackeigenschaften wurden Weißlacke hergestellt; dabei wurden die Polyesterpolyole aus den Beispielen 1 bis 7 mit verschiedenen Zusätzen sowie Weißpigment versehen und auf einem Schüttelbock ("Red Devil") angerieben.

Anschließend wurde mit einem Lackpolyisocyanat versetzt, wobei ein NCO/OH-Verhältnis von ca. 1:1 eingehalten wurde. Als "Lackpolyisocyanat" diente ein Biuretpolyisocyanat auf Basis 1,6-Diisocyanatohexan, bestehend aus einem Gemisch von N,N',N''-Tris-(isocyanatohexyl)-biuret mit seinen höheren Homologen, 75 %ig gelöst in 1-Methoxypropylacetat-2/Xylol (Volumenverhältnis 1:1), NCO-Gehalt der Lösung: 16,5 Gew.-%, Gehalt der Lösung an freiem 1,6-Diisocyanatohexan: unter 0,5 %.

Bezogen auf Festharz (Summe der festen Anteile an Polyol und Polyisocyanat) wurden folgende Anteile an Zusatzstoffen verwendet).

**Tabelle 1**

| Bestandteile | Gew.-% fest auf fest |
|---|---|
| ®Desmorapid PP (PUR-Katalysator der Bayer AG, 10 %ig in MPA) | 0,3 |
| ®Tinuvin 292 (Lichtschutzmittel der Fa. Ciba Geigy, Basel, 10 %ig in Xylol) | 1,0 |
| Titandioxid (®Bayertitan R-KB-4 der Bayer AG) | 80,0 |
| ®Bentone 38 (Antiabsetzmittel der Fa. Kronos Titan GmbH, Leverkusen, 10 %iger Aufschluß in Solvesso 100/Antiterra U 85:5) | 0,7 |
| ®Baysilone-Öl OL 17 (Verlaufsmittel der Bayer AG, 10 %ig in MPA) | 0,1 |

Als Lösemittel wurde ein Gemisch aus Methoxypropylacetat (MPA), Xylol und n-Butylacetat (6:1:3) verwendet, es wurde verdünnt bis auf einen Gehalt von:
30 Gew.-% Bindemittel
24 Gew.-% Pigment
0,6 Gew.-% Additive
45 Gew.-% Lösemittel.

Die Auslaufzeit (DIN 53211; 4-mm-Düse) betrug ca. 18 Sekunden. Damit sind die Lacke spritzfertig eingestellt.

Die Lacke wurden auf Glasplatten aufgezogen (Schichtdicke ca. 100 µm Naßfilm), sowohl bei Raumtemperatur als auch 30 Minuten bei 60°C getrocknet, wobei die Trocknungsgeschwindigkeit (DIN 53 150) ermittelt wurde, und dann 7 Tage bei Raumtemperatur gelagert. Die Trockenfilmdicke betrug ca. 50 µm.

Anschließend wurde die Härte nach König (DIN 53157), der Glanz nach Gardner bei 60°C (DIN 67530) und die Anlösbarkeit durch Superbenzin geprüft. Außerdem wurde die Vergilbungsresistenz bei Bestrahlung mit kurzwelligem UV-Licht im QUV-Test (QUV-Accelerated Weathering Tester, ASTM G 53-77) geprüft. Hierzu wurden auf Aluminiumbleche (68 mm x 150 mm), die zuvor grundiert und mit weißem Basislack beschichtet wurden, Klarlacke auf Basis der Polyesterpolyole der Beispiele 1 bis 7 appliziert. Zur Herstellung derselben wurde in der Formulierung der Tabelle 1 der Anteil an Titandioxid und ®Bentone weggelassen und mittels Lösergemisch auf ca. 43 % Festkörpergehalt eingestellt. Nach Aufspritzen und Trocknen der Lacke (30 Minuten bei 60°C) wurden diese 7 Tage bei Raumtemperatur gelagert und anschließend im QUV-Gerät (Fa. Q-Panel Company) geprüft. Dabei wurde im Zyklus jeweils 4 h mit intensivem, ungefiltertem UV-Licht im Wellenlängenbereich von ca. 280 bis 370 nm (Maximum bei 313 nm) bestrahlt bzw. 4 h im Dunkeln belassen, bei einer Gesamtdauer von 1000 h. Nach dem Abwaschen der Probe wird mittels eines Farbmeßgerätes die Gesamtfarbdifferenz ΔE (gegenüber der nicht bewitterten Platte) als Maß für die aufgetretene Vergilbung sowohl nach 200 h als auch nach 1000 h bestimmt.

Die Prüfergebnisse von Lacken auf Basis der Beispiele 1 bis 7 sind in Tabelle 2 dargestellt.

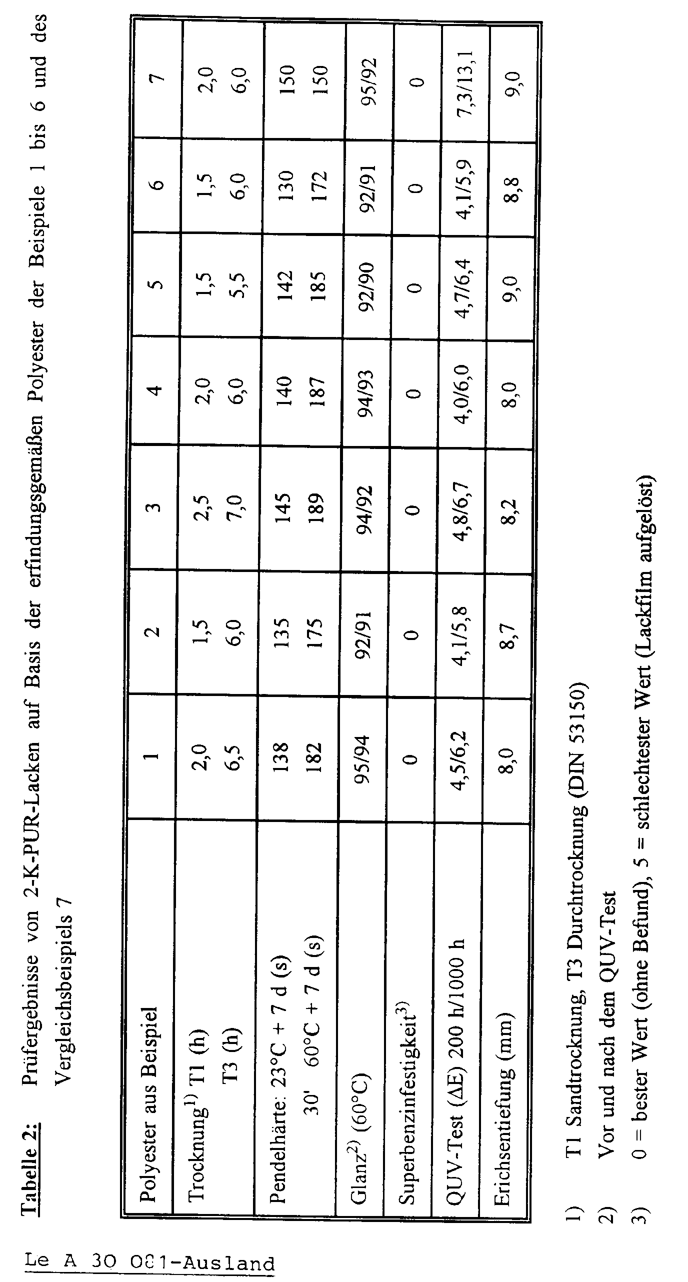

### Diskussion der Resultate

2-K-PUR-Lacke auf Basis der Polyester aus den Beispielen 1 bis 7 haben nach schneller Trocknung eine hohe Pendelhärte, sind hochglänzend, elastisch und beständig gegen die Einwirkung von Superbenzin. Die Ergebnisse der Farbmessungen machen insbesondere die ausgezeichnete UV-Beständigkeit der erfindungsgemäßen Lacke der Beispiele 1 bis 6 zu dem Vergleichslack aus Beispiel 7 deutlich.

## Patentansprüche

1. Polyesterpolyole des Hydroxylzahlbereichs 175 bis 520, die Umsetzungsprodukte von
a) 50 bis 60 Mol-% einer Polyolkomponente mit
b) 40 bis 50 Mol-% einer Dicarbonsäurekomponente
darstellen, dadurch gekennzeichnet, daß
a) die Polyolkomponente aus (i) 0 bis 39 Mol-% eines zweiwertigen, aliphatischen oder cycloaliphatischen Alkohols mit mindestens zwei Kohlenstoffatomen, der von Neopentylglykol verschieden ist, oder eines Gemischs mehrerer derartiger Alkohole, (ii) 20 bis 59 Mol-% Neopentylglykol und (iii) 41 bis 80 Mol-% eines mindestens dreiwertigen, aliphatischen Alkohols mit mindestens 3 Kohlenstoffatomen oder eines Gemischs derartiger Alkohole besteht und
b) die Dicarbonsäurekomponente aus (iv) 0 bis 60 Mol-% einer aliphatischen oder cycloaliphatischen, gesättigten oder ungesättigten Dicarbonsäure bzw. deren Anhydrid mit mindestens zwei Kohlenstoffatomen, die von Fumarsäure, Itaconsäure und Maleinsäure bzw. deren Anhydride verschieden ist oder eines Gemischs mehrerer derartiger Säuren oder Anhydride und (v) 40 bis 100 Mol-% Fumarsäure, Itaconsäure oder Maleinsäure bzw. deren Anhydride oder Gemischen davon besteht,
wobei sich die unter a) und b) gemachten Prozentangaben jeweils zu 100 ergänzen.

2. Polyesterpolyole gemäß Anspruch 1, dadurch gekennzeichnet, daß die Polyolkomponente a) aus 0 bis 20 Mol-% der Komponente (i), 30 bis 50 Mol-% der Komponente (ii), 50 bis 70 Mol-% der Komponente (iii) und die Dicarbonsäurekomponente b) aus 0 bis 40 Mol-% der Komponente (iv) und 60 bis 100 Mol-% der Komponente (v) besteht.

3. Polyesterpolyole gemäß Anspruch 1 und 2, dadurch gekennzeichnet, daß die Polyolkomponente a) aus 0 bis 10 Mol-% der Komponente (i), 35 bis 45 Mol-% der Komponente (ii), 55 bis 65 Mol-% der Komponente (iii) und die Dicarbonsäurekomponente b) aus 0 bis 20 Mol-% der Komponente (iv) und 80 bis 100 Mol-% der Komponente (v) besteht.

4. Verwendung der Polyesterpolyole gemäß Anspruch 1 bis 3, gegebenenfalls in Abmischung mit anderen organischen Hydroxylverbindungen, als Bindemittelkomponente für Zweikomponenten-Polyurethanlacke, die Lackpolyisocyanate sowie gegebenenfalls die in der Polyurethantechnologie üblichen Hilfs- und Zusatzmittel enthalten.

5. Verwendung gemäß Anspruch 4 bei der Herstellung von Lacküberzügen auf Großfahrzeugen und bei der Autoreparaturlackierung.

## Claims

1. Polyester polyols of the hydroxyl value range from 175 to 520, which constitute reaction products of
a) 50 to 60 mol% of a polyol component with
b) 40 to 50 mol% of a dicarboxylic acid component,
characterised in that
a) the polyol component consists of (i) 0 to 39 mol% of a divalent aliphatic or cycloaliphatic alcohol having at least two carbon atoms other than neopentyl glycol, or a mixture of two or more such alcohols, (ii) 20 to 59 mol% of neopentyl glycol and (iii) 41 to 80 mol% of an at least trihydric aliphatic alcohol having at least 3 carbon atoms or a mixture of such alcohols and
b) the dicarboxylic acid component consists of (iv) 0 to 60 mol% of an aliphatic or cycloaliphatic, saturated or unsaturated dicarboxylic acid or the anhydride thereof having at least two carbon atoms other than fumaric acid, itaconic acid and maleic acid or the anhydrides thereof or a mixture of two or more of such acids or anhydrides and (v) 40 to 100 mol% of fumaric acid, itaconic acid or maleic acid or the anhydrides thereof or mixtures thereof,
wherein the percentages stated in a) and b) in each case add up to 100.

2. Polyester polyols according to claim 1, characterised in that the polyol component a) consists of 0 to 20 mol% of component (i), 30 to 50 mol% of component (ii), 50 to 70 mol% of component (iii) and the dicarboxylic acid component b) consists of 0 to 40 wt.% of component (iv) and 60 to 100 mol% of component (v).

3. Polyester polyols according to claims 1 and 2, characterised in that the polyol component a) consists of 0 to 10 mol% of component (i), 35 to 45 mol% of component (ii), 55 to 65 mol% of component (iii) and the dicarboxylic acid component b) consists of 0 to 20 mol% of component (iv) and 80 to 100 mol% of component (v).

4. Use of the polyester polyols according to claims 1 to 3, optionally blended with other organic hydroxyl compounds, as a binder component for two-component polyurethane lacquers, which contain lacquer polyisocyanates optionally together with the auxiliary substances and additives conventional in polyurethane technology.

5. Use according to claim 4 in the production of lacquer coatings on large vehicles and in automotive repair lacquer coating.

## Revendications

1. Polyester-polyols ayant un intervalle d'indice hydroxyle allant de 175 à 520, qui sont les produits de réaction de :
a) 50 à 60% en moles d'un composant polyol, avec
b) 40 à 50% en moles d'un composant diacide carboxylique,
caractérisés en ce que :
a) le composant polyol consiste en (i) 0 à 39% en moles d'un alcool bivalent, aliphatique ou cycloaliphatique, ayant au moins deux atomes de carbone, qui est différent du néopentylglycol, ou un mélange de plusieurs de ces alcools, (ii) 20 à 59% en moles de néopentylglycol, et (iii) 41 à 80% en moles d'un alcool aliphatique au moins trivalent, ayant au moins 3 atomes de carbone ou un mélange de tels alcools, et
b) le composant diacide carboxylique consiste en (iv) 0 à 60% en moles d'un diacide carboxylique aliphatique ou cycloaliphatique, saturé ou insaturé ou son anhydride, ayant au moins deux atomes de carbone, qui est différent de l'acide fumarique, de l'acide itaconique et de l'acide maléique ou de leur anhydride, ou un mélange de plusieurs de ces acides ou anhydrides, et (V) 40 à 100% en moles d'acide fumarique, d'acide itaconique ou d'acide maléique ou de leur anhydride ou un mélange de ceux-ci,
où les données en pourcentages indiquées sous a) et b) se complètent chaque fois à 100.

2. Polyester-polyols suivant la revendication 1, caractérisés en ce que le composant polyol a) consiste en 0 à 20% en moles du composant (i), 30 à 50% en moles du composant (ii), 50 à 70% en moles du composant (iii) et le composant diacide carboxylique b), en 0 à 40% en moles du composant (iv) et 60 à 100% en moles du composant (v).

3. Polyester-polyols suivant les revendications 1 et 2, caractérisés en ce que le composant polyol a) consiste en 0 à 10% en moles du composant (i), 35 à 45% en moles du composant (ii), 55 à 65% en moles du composant (iii) et le composant diacide carboxylique b), en 0 à 20% en moles du composant (iv) et 80 à 100% en moles du composant (v).

4. Utilisation du polyester-polyol suivant les revendications 1 à 3, facultativement en mélange avec d'autres composés hydroxylés organiques, comme composant d'agent liant pour les vernis, laques ou peintures de polyuréthanne à deux composants, qui contiennent le polyisocyanate de vernis, laque ou peinture ainsi que facultativement, les auxiliaires et additifs usuels dans la technologie des polyuréthannes.

5. Utilisation suivant la revendication 4, dans la préparation de revêtement en vernis, laque ou peinture sur des véhicules lourds ou dans la peinture automobile de retouche.
